# EUROPÄISCHE PATENTSCHRIFT

(11) **EP 2 547 626 B1**
(45) Veröffentlichungstag und Bekanntmachung des Hinweises auf die Patenterteilung: **18.06.2014**
(21) Anmeldenummer: 11708784.1
(22) Anmeldetag: 08.03.2011
(51) Int. Cl.: C02F 3/20, B01F 3/04

(54) **VORRICHTUNG ZUM BEGASEN EINER IN EINEM BEHANDLUNGSBECKEN AUFGENOMMENEN SUSPENSION**
DEVICE FOR AERATING A SUSPENSION HELD IN A TREATMENT TANK
DISPOSITIF POUR GAZÉIFIER UNE SUSPENSION REÇUE DANS UN BASSIN DE TRAITEMENT

(30) Priorität: 17.03.2010 DE 102010002959
(43) Veröffentlichungstag der Anmeldung: 23.01.2013
(73) Patentinhaber: INVENT Umwelt- und Verfahrenstechnik AG, 91058 Erlangen (DE)
(72) Erfinder: HÖFKEN, Marcus, 91054 Erlangen (DE)
(74) Vertreter: Gassner, Wolfgang
(86) Internationale Anmeldenummer: PCT/EP2011/053467
(87) Internationale Veröffentlichungsnummer: WO 2011/113726

(56) Entgegenhaltungen:
- WO-A2-2007/051150
- DE-U1- 9 405 517
- US-A1- 2008 135 648
- "Infoschrift Nr. 126-d: Die E-Flex -Technologie", Biogest International GmbH , 7. Dezember 2009 (2009-12-07), Seiten 1-6, XP007918195, Gefunden im Internet: URL:http://www.biogest-international.de/de u/pdf-de/info126d-e-flex-membran-belueftun g.pdf [gefunden am 2011-04-11]

## Beschreibung

Die Erfindung betrifft eine Vorrichtung zum Begasen einer in einem Behandlungsbecken aufgenommenen Suspension, insbesondere Abwasser, Belebtschlamm und dgl., nach dem Oberbegriff des Anspruchs 1.

Eine solche Vorrichtung ist aus dem Prospekt "E-FLEX^{®}-Belüftungssystem", Nr. EF 3000 6.03-2 D der Firma Invent Umweltund Verfahrenstechnik GmbH & CO. KG, D-91058 Erlangen bekannt.

Bei der bekannten Vorrichtung sind Längsholme eines Rahmens über mehrere Querholme miteinander verbunden. Am einen Ende der Längsholme ist ein nach Art eines weiteren Querholms ausgebildeter Druckluftverteiler angebracht. Der Druckluftverteiler weist ein im Wesentlichen gasdicht ausgebildetes Gehäuse auf, an dem eine Vielzahl erster Anschlussstutzen zum Anschluss von Luftverteilerleitungen und einer zweiter Anschlussstutzen zum Anschluss einer Luftzuführleitung vorgesehen sind. Das Gehäuse ist so am Rahmen befestigt, dass erste Achsen der ersten Anschlussstutzen etwa parallel zu einer die Längsholme enthaltenden Ebene verlaufen. D. h. die mit ihren ersten Enden an den ersten Anschlussstutzen angeschlossenen Luftverteilungsleitungen verlaufen etwa parallel zu den Längsholmen. Die üblicherweise aus perforierten Schläuchen gebildeten Luftverteilerleitungen erstrecken sich bis zu einer gegenüberliegend des Druckluftverteilers vorgesehenen, ebenfalls nach Art eines weiteren Querholms ausgebildeten Halteeinrichtung und sind dort mit ihren zweiten Enden befestigt.

Sofern die herkömmliche Vorrichtung am Rand des Behandlungsbeckens angeordnet ist, erstreckt sich die zweite Achse des zweiten Anschlussstutzens im Wesentlichen senkrecht zu den ersten Achsen der ersten Anschlussstutzen, so dass eine am zweiten Anschlussstutzen angebrachte Luftzuführleitung etwa senkrecht zu einer Wand des Behandlungsbeckens aus dem Behandlungsbecken herausgeführt werden kann. Bei zentral im Behandlungsbecken vorgesehenen Vorrichtungen wird die Luftzuführleitung am Beckenboden entlanggeführt. In diesem Fall ist der zweite Anschlussstutzen so angebracht, dass dessen zweite Achse im Wesentlichen parallel zu den ersten Achsen der ersten Anschlussstutzen verläuft. - Bei der herkömmlichen Vorrichtung ist also die Herstellung zweier unterschiedlicher Varianten des Druckluftverteilers erforderlich.

Das Gehäuse des herkömmlichen Druckluftverteilers ist im Wesentlichen aus einem Vierkantrohr gebildet, an dessen einer Seitenwand eine Vielzahl von Durchbrüchen zur Montage von die ersten Anschlussstutzen bildenden Anschlussstücken vorgesehen sind. Jedes Anschlussstück wird vom Innenraum des Gehäuses her mittels eines Spezialwerkzeugs durch einen Durchbruch hindurchgeführt und anschließend mit einer Mutter befestigt. Insgesamt ist die Herstellung des herkömmlichen Druckluftverteilers zeit- und kostenaufwändig.

Aufgabe der Erfindung ist es, die Nachteile nach dem Stand der Technik zu beseitigen. Es soll insbesondere eine Vorrichtung zum Begasen einer in einem Behandlungsbecken aufgenommenen Suspension angegeben werden, die einfach und kostengünstig herstellbar ist. Nach einem weiteren Ziel der Erfindung soll die Vorrichtung möglichst universell einsetzbar sein.

Diese Aufgabe wird durch die Merkmale des Anspruchs 1 gelöst. Zweckmäßige Ausgestaltungen der Erfindung ergeben sich aus den Merkmalen der Ansprüche 2 bis 17.

Nach Maßgabe der Erfindung ist vorgesehen, dass eine zweite Achse des zweiten Anschlussstutzens mit der Ebene einen Winkel von 30 bis 60° bildet. - Indem die zweite Achse des zweiten Anschlussstutzens schräg zur Ebene verläuft, ist es möglich, durch einen Anschluss eines abgewinkelten Schlauchanschlussstücks an den zweiten Anschlussstutzen einen Anschluss für die Luftzuführleitung zu schaffen, der sowohl im Wesentlichen parallel als auch im Wesentlichen senkrecht zur Ebene steht. Es können also mit ein und derselben Vorrichtung beide Varianten realisiert werden. Es ist nicht mehr erforderlich, zu diesem Zweck zwei unterschiedliche Druckluftverteiler herzustellen. Die vorgeschlagene Vorrichtung ist universell und lässt sich einfach und kostengünstig herstellen.

Nach einer besonders vorteilhaften Ausgestaltung der Erfindung bildet die zweite Achse des zweiten Anschlussstutzens mit der Ebene einen Winkel von etwa 45°. Damit können durch Kombination mit einem einzigen abgewinkelten Schlauchanschlussstück, nämlich einem unter 45° abgewinkelten Schlauchanschlussstück, beide Varianten des Anschlusses für die Luftzuführleitung realisiert werden.

Nach einer weiteren vorteilhaften Ausgestaltung ist das Gehäuse aus einem Anschlusselement und einem Deckel gebildet. Das Anschlusselement weist zweckmäßigerweise eine Grundplatte, eine von einer ersten langen Seite der Grundplatte sich im Wesentlichen senkrecht erstreckende Anschlusswand und zwei von den kurzen Seiten der Grundplatte sich im Wesentlichen senkrecht erstreckende Querwände auf. Die ersten Anschlussstutzen sind vorteilhafterweise aus an der Anschlusswand angebrachten Anschlussstücken gebildet. Zu diesem Zweck kann die Anschlusswand zum Anschluss jedes der Anschlussstücke einen Anschlussstück-Durchbruch aufweisen. Die Anschlussstücke können beispielsweise aus spritzgegossenem Kunststoff hergestellt sein. - Indem das Gehäuse einen Deckel aufweist, kann die Montage der Anschlussstücke erheblich vereinfacht werden. Zu diesem Zweck ist es nicht mehr erforderlich, ein Spezialwerkzeug bereitzustellen.

Nach einer weiteren vorteilhaften Ausgestaltung der Erfindung sind an den Querwänden sich über die Grundplatte hinaus erstreckende Befestigungsabschnitte vorgesehen. Die, vorzugsweise Durchbrüche zum Befestigen von Nieten aufweisenden, Befestigungsabschnitte können in einstückiger Ausbildung mit den Querwänden hergestellt sein. Des Weiteren sind die Querwände zweckmäßigerweise mit der Grundplatte und der Anschlussplatte verschweißt. Damit erübrigt sich eine gesonderte Herstellung und Befestigung der Befestigungsabschnitte. Die Herstellung der Vorrichtung kann damit weiter vereinfacht werden.

Nach einer weiteren Ausgestaltung der Erfindung erstreckt sich von einer zweiten langen Seite der Grundplatte unter einem Winkel von 30 bis 60°, vorzugsweise 45°, ein erster Auflagesteg. Von einer dritten langen Seite der Anschlusswand kann sich eine im Wesentlichen parallel zur Grundplatte verlaufende Deckplatte erstrecken. Von einer dritten langen Seite der Anschlusswand oder von einer vierten langen Seite der Deckplatte kann sich unter einem Winkel von 30 bis 60°, vorzugsweise 45°, in Richtung des ersten Auflagestegs ein zweiter Auflagesteg erstrecken. Ferner können sich im Wesentlichen senkrecht von den Querwänden dritte Auflagestege erstrecken, welche an die ersten und zweiten Auflagestege angrenzen. Das Vorsehen der Auflagestege ermöglicht eine einfache und gasdichte Befestigung des Deckels. Der Deckel kann beispielsweise mittels gasdichter Nieten am Anschlusselement, insbesondere an den Auflagestegen, und/oder unter Verwendung einer zwischen den Auflagestegen und dem Deckel umlaufend vorgesehenen Dichtungsmasse angebracht werden. In diesem Fall bildet der Deckel mit der Grundplatte vorteilhafterweise einen Winkel von 30 bis 60°, vorzugsweise etwa 45°.

Vorteilhafterweise ist der zweite Anschlussstutzen am Deckel angebracht. Er weist ein Gewinde, vorzugsweise ein Innengewinde, auf. Zur Realisierung der beiden Anschlussvarianten für die Luftzuführleitung ist am zweiten Anschlussstutzen ein unter einem Winkel von 30 bis 60°, vorzugsweise 45°, abgewinkeltes Schlauchanschlussstück angebracht. - Ein Winkel des abgewinkelten Schlauchanschlussstücks ist so gewählt, dass er sich vorteilhafterweise zusammen mit dem Winkel der zweiten Achse des zweiten Anschlussstutzens zu 90° oder zu 0° ergänzt. Indem das Schlauchanschlussstück in unterschiedlichen Orientierungen am zweiten Anschlussstutzen befestigt wird, ist es möglich, die Luftzuführleitung senkrecht oder auch parallel zur Ebene zu montieren.

Nachfolgend wird ein Ausführungsbeispiel der Erfindung anhand der Zeichnungen näher erläutert. Es zeigen:
- Fig. 1: eine Explosionsdarstellung der Vorrichtung,
- Fig. 2: eine perspektivische Teilansicht eines Anschlusselements,
- Fig. 3: eine perspektivische Teilansicht des Druckluftverteilers,
- Fig. 4: eine Schnittansicht gemäß der Schnittlinie A-A' in Fig. 3 und
- Fig. 5: eine weitere perspektivische Ansicht des Druckluftverteilers.

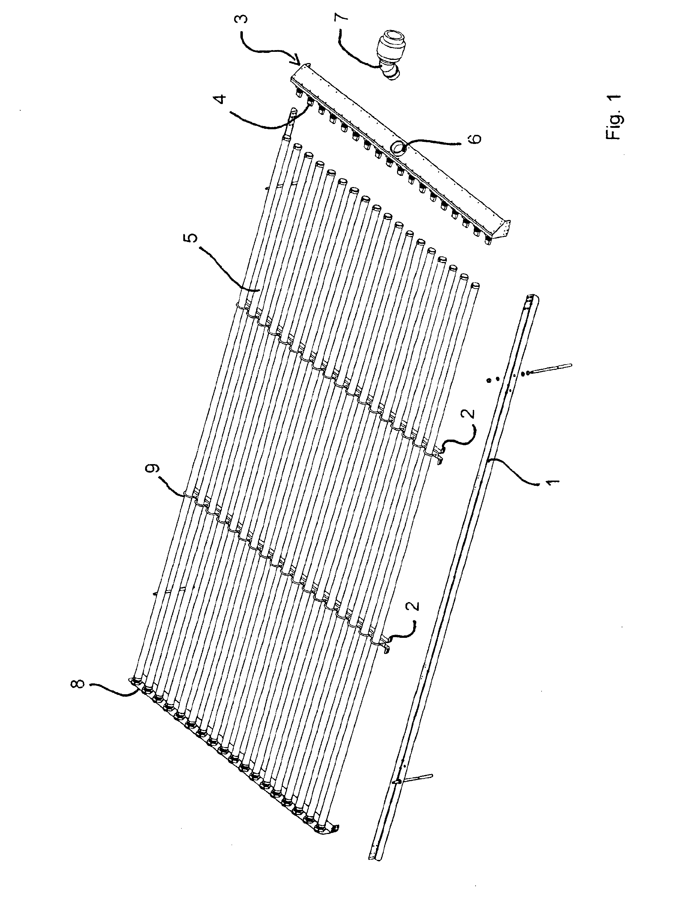

Bei der in Fig. 1 gezeigten Vorrichtung umfasst ein rechteckiger Rahmen zwei Längsholme 1 und mehrere die beiden Längsholme 1 miteinander verbindende Querholme 2. Eine erste Querseite des Rahmens wird durch einen Druckluftverteiler 3 gebildet. Die Längsholme 1 sind mit ihren einen Enden beidseits am Druckluftverteiler 3 befestigt. - Der Druckluftverteiler 3 weist eine Vielzahl erster Anschlussstutzen 4 auf, an deren erste Enden Luftverteilerleitungen 5 angebracht sind. Erste Achsen der ersten Anschlussstutzen 4 sind parallel und verlaufen außerdem parallel zu einer auf den Längsholmen 1 aufliegenden oder die Längsholme 1 enthaltenden Ebene. Mit dem Bezugszeichen 6 ist ein zweiter Anschlussstutzen bezeichnet. Eine zweite Achse des zweiten Anschlussstutzens 6 bildet mit der Ebene einen Winkel von 45°. Am zweiten Anschlussstutzen 6 ist ein unter 45° abgewinkeltes Schlauchanschlussstück 7 anschließbar. - Zweite Enden der Luftverteilerleitungen 5 sind an Blindstutzen befestigt, welche einer Halteeinrichtung 8 vorgesehen sind. Die Halteeinrichtung 8 bildet eine zweite Querseite des Rahmens. Die Längsholme 1 sind mit ihren anderen Ende beidseits an der Halteeinrichtung 8 befestigt.

An den etwa parallel zum Druckluftverteiler 3 oder der Halteeinrichtung 8 verlaufenden Querholmen 2 sind Niederhalter 9 angebracht, mit denen die Luftverteilerleitungen 5 an den Querholmen 2 gehalten werden. Die Luftverteilerleitungen 5 können beispielsweise aus EPDM-Kautschuk hergestellt sein. Die ersten Anschlussstutzen 4 und die (hier nicht im Einzelnen gezeigten) Blindstutzen können beispielsweise aus faserverstärktem Polypropylen hergestellte Stutzen sein. Die Luftverteilerleitungen 5 weisen Durchbrüche, beispielsweise Schlitze, zum Austritt von Luft in das umgebende Abwasser (hier nicht gezeigt) auf.

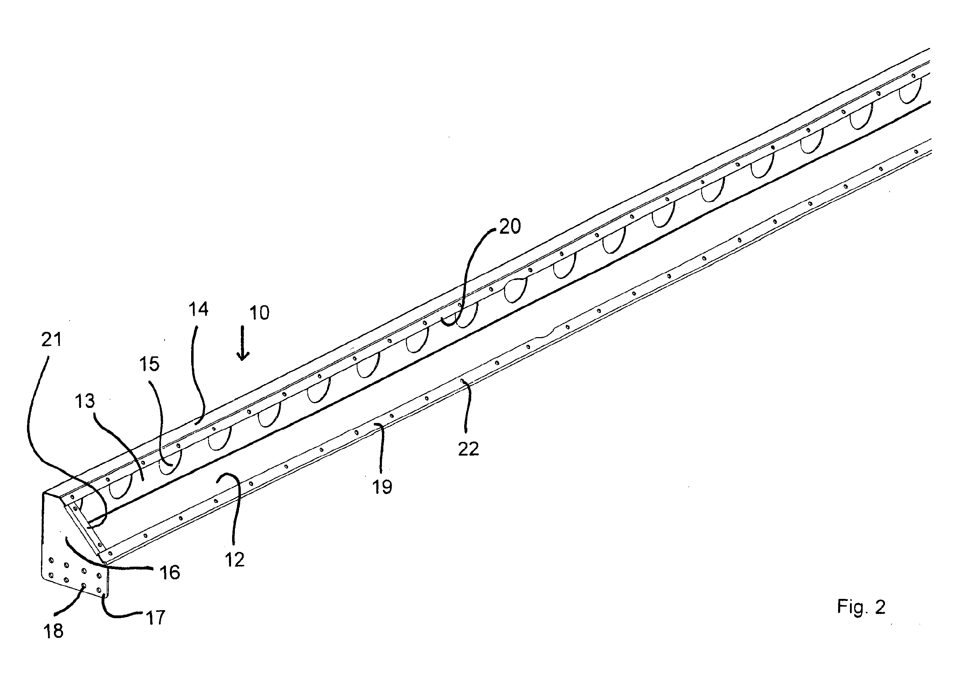

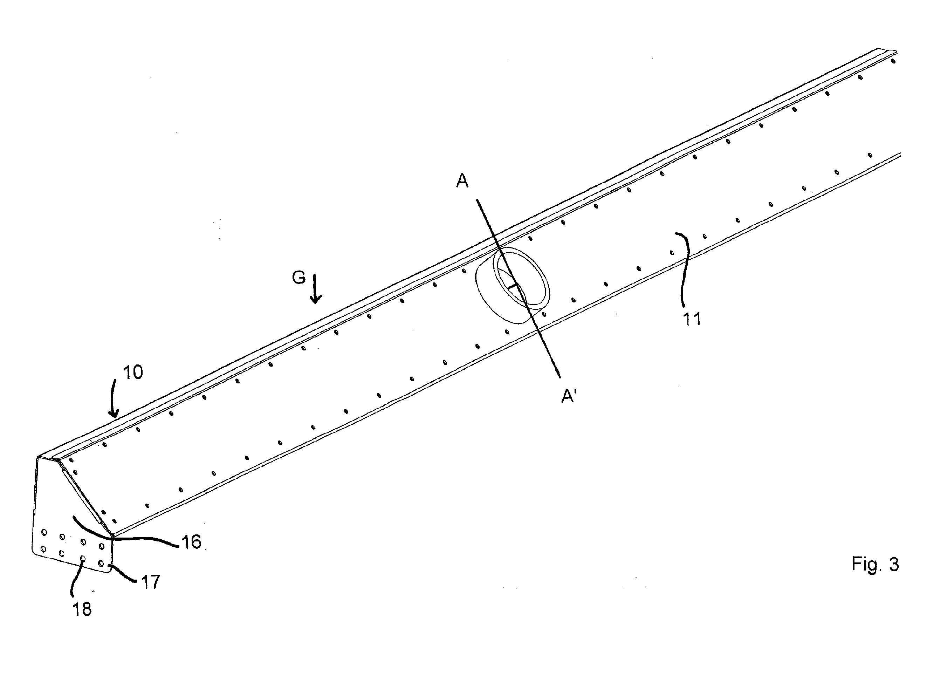

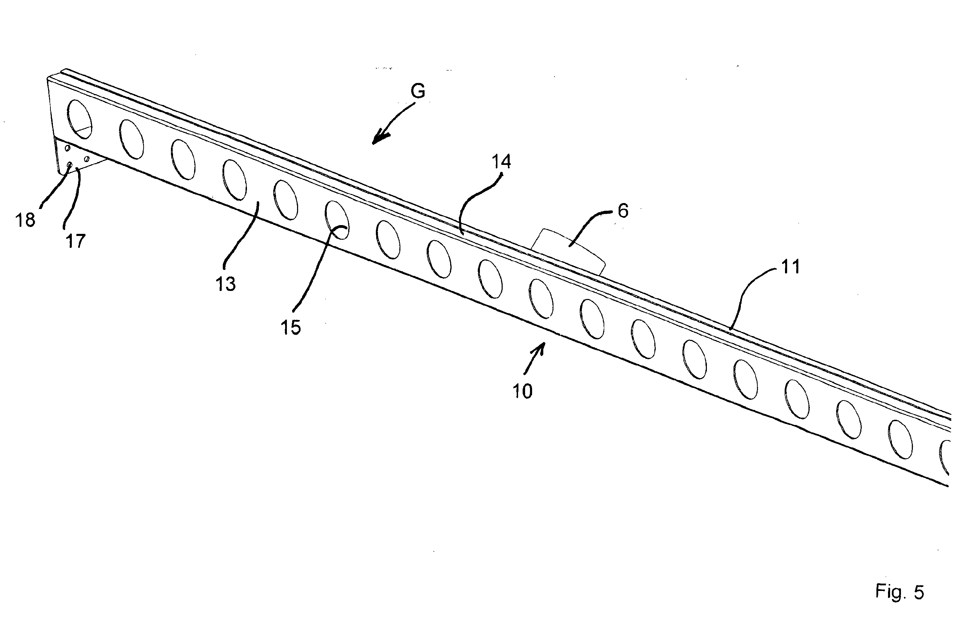

Die Fig. 2 bis 5 zeigen im Detail ein Gehäuse G des Druckluftverteilers 3. Das vorteilhafterweise aus Edelstahlblech gefertigte Gehäuse G umfasst ein Anschlusselement 10 und einen daran angebrachten Deckel 11. Am Deckel 11 ist der zweite Anschlussstutzen 6, vorzugsweise mittels einer Schweißverbindung, angebracht. Das Anschlusselement 10 ist aus einer eine erste und eine zweite lange Seite aufweisenden Grundplatte 12, einer sich von der ersten langen Seite im Wesentlichen senkrecht erstreckenden Anschlussplatte 13 sowie einer im Wesentlichen parallel zur Grundplatte 12 verlaufenden Deckplatte 14 gebildet, welche sich von einer dritten langen Seite der Anschlusswand 13 erstreckt. Die Anschlusswand 13 weist eine Vielzahl von ersten Durchbrüchen 15 zum Anschluss der ersten Anschlussstutzen 4 auf. Mit dem Bezugszeichen 16 sind Querwände bezeichnet, welche sich senkrecht zur Grundplatte 12 erstrecken und mit der Anschlusswand 13 und der Deckplatte 14 verbunden sind. Von den Querwänden 16, die vorteilhafterweise mit der Grundplatte 12, der Anschlusswand 13 und der Deckplatte 14 verschweißt sind, erstrecken sich in einstückiger Ausbildung Befestigungsabschnitte 17 mit daran vorgesehenen zweiten Durchbrüchen 18. Mit dem Bezugszeichen 19 ist ein erster Auflagesteg bezeichnet, welcher sich von der zweiten langen Seite der Grundplatte 12 in einem Winkel von 45° erstreckt. Mit dem Bezugszeichen 20 ist ein zweiter Auflagesteg bezeichnet, welcher sich von einer vierten langen Seite der Deckplatte 14 in einem Winkel von 45° in Richtung des ersten Auflagestegs 19 erstreckt. Mit dem Bezugszeichen 21 sind dritte Auflagestege bezeichnet, welche sich von den Querwänden 16 erstrecken und an die ersten 19 und zweiten Auflagestege 20 angrenzen. Die Auflagestege 19, 20, 21 weisen dritten Durchbrüche 22 auf.

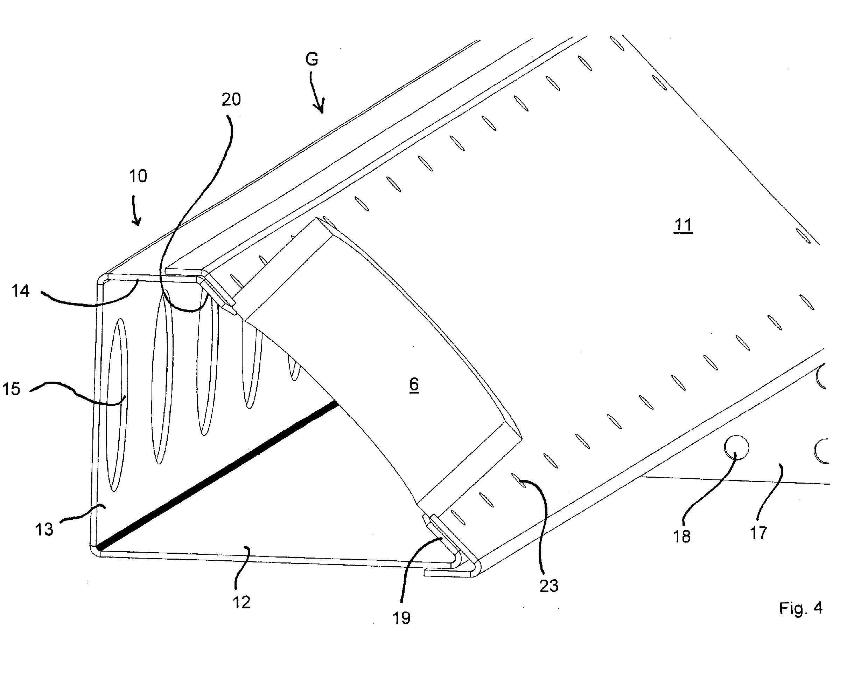

Wie insbesondere aus Fig. 4 ersichtlich ist, weist der Deckel 11 zu den dritten Durchbrüchen 22 korrespondierende vierte Durchbrüche 23 auf, welche bei auf den Auflagestegen 19, 20, 21 aufliegendem Deckel 11 mit den zweiten Durchbrüchen 18 fluchten, so dass durch die zweiten 22 und die dritten Durchbrüche 22 Nieten gesteckt und eine Nietverbindung hergestellt werden kann.

Der erfindungsgemäße Druckluftverteiler 3 lässt sich wie folgt einfach montieren:
Zunächst werden am Anschlusselement 10 die ersten Anschlussstutzen 4 montiert. Anschließend wird eine dauerelastische Dichtungsmasse auf die Auflagestege 19, 20, 21 aufgetragen und nachfolgend der Deckel 11 aufgesetzt, so dass die dritten 22 und vierten Durchbrüche 23 fluchten. Der Deckel 11 wird sodann mittels gasdichter Nieten mit dem Anschlusselement 10 verbunden. Die so hergestellte Verbindung ist gasdicht. Mittels der Befestigungsabschnitte 17 kann dann der Druckluftverteiler 3, beispielsweise wiederum mittels Nietverbindungen, mit den Längsholmen 1 verbunden werden. Desgleichen können die Querholme 2 und die Halteeinrichtung 8, vorzugsweise mittels Nietverbindungen, mit den Längsholmen 1 verbunden werden, so dass sich insgesamt ein rechteckiger Rahmen ergibt. Anschließend können innerhalb des Rahmens die Luftverteilerleitungen 5 montiert werden. Das 45°-Schlauchanschlussstück 7 kann in einer beliebigen Orientierung am, vorzugsweise aus Edelstahl hergestellten, zweiten Anschlussstutzen 6 befestigt werden. Infolgedessen kann mittels des, vorzugsweise aus Metall oder Kunststoff hergestellten, 45°-Schlauchanschlussstücks 7 bzw. Winkelstücks eine dritte Achse für eine (hier nicht gezeigte) Zuführleitung entweder parallel zu den ersten Achsen der ersten Anschlussstutzen 4 oder auch senkrecht dazu eingestellt werden.

Die gezeigte Vorrichtung lässt sich einfach montieren. Sie ist besonders universell.

### Bezugszeichenliste

- 1: Längsholm
- 2: Querholm
- 3: Druckluftverteiler
- 4: erster Anschlussstutzen
- 5: Luftverteilerleitung
- 6: zweiter Anschlussstutzen
- 7: 45°-Schlauchanschlussstück
- 8: Halteeinrichtung
- 9: Niederhalter
- 10: Anschlusselement
- 11: Deckel
- 12: Grundplatte
- 13: Anschlusswand
- 14: Deckplatte
- 15: erster Durchbruch
- 16: Querwand
- 17: Befestigungsabschnitt
- 18: zweiter Durchbruch
- 19: erster Auflagesteg
- 20: zweiter Auflagesteg
- 21: dritter Auflagesteg
- 22: dritter Durchbruch
- 23: vierter Durchbruch

- G: Gehäuse

## Patentansprüche

1. Vorrichtung zum Begasen einer in einem Behandlungsbecken aufgenommenen Suspension, insbesondere Abwasser, Belebtschlamm und dgl.,
mit einem Längsholme (1) aufweisenden Rahmen und
einem Druckluftverteiler (3), dessen Gehäuse (G) eine Vielzahl erster Anschlussstutzen (4) zum Anschluss von Luftverteilerleitungen (5) und einen zweiten Anschlussstutzen (6) zum Anschluss einer Luftzuführleitung aufweist,
wobei das Gehäuse (G) so am Rahmen befestigt ist, dass erste Achsen der ersten Anschlussstutzen (4) etwa parallel zu einer die Längsholme (1) enthaltenden Ebene verlaufen,
**dadurch gekennzeichnet, dass**
eine zweite Achse des zweiten Anschlussstutzens (6) mit der Ebene einen Winkel von 30 bis 60° bildet.

2. Vorrichtung nach Anspruch 1, wobei die zweite Achse des zweiten Anschlussstutzens (6) mit der Ebene einen Winkel von etwa 45° bildet.

3. Vorrichtung nach einem der vorhergehenden Ansprüche, wobei das Gehäuse (G) aus einem Anschlusselement (10) und einem Deckel (11) gebildet ist.

4. Vorrichtung nach einem der vorhergehenden Ansprüche, wobei das Anschlusselement (10) eine Grundplatte (12), eine von einer ersten langen Seite der Grundplatte (12) sich im Wesentlichen senkrecht erstreckende Anschlusswand (13) und zwei von den kurzen Seiten der Grundplatte (12) sich im Wesentlichen senkrecht erstreckende Querwände (16) aufweist.

5. Vorrichtung nach einem der vorhergehenden Ansprüche, wobei die ersten Anschlussstutzen (4) aus an der Anschlusswand (13) angebrachten Anschlussstücken gebildet sind.

6. Vorrichtung nach einem der vorhergehenden Ansprüche, wobei an den Querwänden (16) sich über die Grundplatte (12) hinaus erstreckende Befestigungsabschnitte (17) vorgesehen sind.

7. Vorrichtung nach einem der vorhergehenden Ansprüche, wobei die, vorzugsweise Durchbrüche (18) zum Befestigen von Nieten aufweisenden, Befestigungsabschnitte (17) in einstückiger Ausbildung mit den Querwänden (16) hergestellt sind.

8. Vorrichtung nach einem der vorhergehenden Ansprüche, wobei die Querwände (16) mit der Grundplatte (12) und der Anschlusswand (13) verschweißt sind.

9. Vorrichtung nach einem der vorhergehenden Ansprüche, wobei sich von einer zweiten langen Seite der Grundplatte (12) unter einem Winkel von 30 bis 60°, vorzugsweise 45°, ein erster Auflagesteg (19) erstreckt.

10. Vorrichtung nach einem der vorhergehenden Ansprüche, wobei sich von einer dritten langen Seite der Anschlusswand (13) eine im Wesentlichen parallel zur Grundplatte (12) verlaufende Deckplatte (14) erstreckt.

11. Vorrichtung nach einem der vorhergehenden Ansprüche, wobei sich von einer dritten langen Seite der Anschlusswand (13) oder von einer vierten langen Seite der Deckplatte (14) unter einem Winkel von 30 bis 60°, vorzugsweise 45°, in Richtung des ersten Auflagestegs (19) ein zweiter Auflagesteg (20) erstreckt.

12. Vorrichtung nach einem der vorhergehenden Ansprüche, wobei sich im Wesentlichen senkrecht von den Querwänden (16) dritte Auflagestege (21) erstrecken, welche an die ersten (19) und die zweiten Auflagestege (20) angrenzen.

13. Vorrichtung nach einem der vorhergehenden Ansprüche, wobei der Deckel (11) mittels gasdichter Nieten am Anschlusselement (10) und/oder unter Verwendung einer zwischen den Auflagestegen (19, 20, 21) und dem Deckel (11) umlaufend vorgesehenen Dichtungsmasse angebracht ist.

14. Vorrichtung nach einem der vorhergehenden Ansprüche, wobei der Deckel (11) mit der Grundplatte (12) einen Winkel von 30 bis 60°, vorzugsweise etwa 45°, bildet.

15. Vorrichtung nach einem der vorhergehenden Ansprüche, wobei der zweite Anschlussstutzen (6) am Deckel (11) angebracht ist.

16. Vorrichtung nach einem der vorhergehenden Ansprüche, wobei der zweite Anschlussstutzen (6) ein Gewinde, vorzugsweise ein Innengewinde, aufweist.

17. Vorrichtung nach einem der vorhergehenden Ansprüche, wobei am zweiten Anschlussstutzen (6) ein unter einem Winkel von 30 bis 60°, vorzugsweise 45°, abgewinkeltes Schlauchanschlussstück (7) angebracht ist.

## Claims

1. A device for aerating a suspension held in a treatment tank, in particular wastewater, activated sludge and the like,
with a frame having longitudinal spars (1), and
a pressurized-air manifold (3), the housing (G) of which has a multiplicity of first connecting sockets (4) for connecting air diffuser lines (5), and a second connecting socket (6) for connecting an air feed line,
wherein the housing (G) is fastened to the frame such that first axes of the first connecting sockets (4) run approximately parallel to a plane containing the longitudinal spars (1),
**characterized in that**
a second axis of the second connecting socket (6) forms an angle of 30 to 60° with the plane.

2. The device according to claim 1, wherein the second axis of the second connecting socket (6) forms an angle of approximately 45° with the plane.

3. The device according to any one of the preceding claims, wherein the housing (G) is formed from a connecting element (10) and a cover (11).

4. The device according to any one of the preceding claims, wherein the connecting element (10) comprises a base plate (12), a connection wall (13) extending substantially perpendicular from a first long side of the base plate (12), and two transverse walls (16) extending substantially perpendicular from the short sides of the base plate (12).

5. The device according to any one of the preceding claims, wherein the first connecting sockets (4) are formed from connecting pieces attached to the connection wall (13).

6. The device according to any one of the preceding claims, wherein fastening sections (17) extending beyond the base plate (12) are provided on the transverse walls (16).

7. The device according to any one of the preceding claims, wherein the fastening sections (17), which preferably have apertures (18) for fastening rivets, are formed as one-piece construction with the transverse walls (16).

8. The device according to any one of the preceding claims, wherein the transverse walls (16) are welded to the base plate (12) and the connection wall (13).

9. The device according to any one of the preceding claims, wherein a first support web (19) extends from a second long side of the base plate (12) at an angle of 30 to 60°, preferably 45°.

10. The device according to any one of the preceding claims, wherein from a third long side of the connection wall (13), a cover plate (14) extends which runs substantially parallel to the base plate (12).

11. The device according to any one of the preceding claims, wherein from a third long side of the connection wall (13) or from a fourth long side of the cover plate (14), a second support web (20) extends at an angle of 30 to 60°, preferably 45°, toward the first support web (19).

12. The device according to any one of the preceding claims, wherein third support webs (21) extend substantially perpendicular from the transverse walls (16), which third support webs (21) adjoin the first (19) and the second support webs (20).

13. The device according to any one of the preceding claims, wherein the cover (11) is attached to the connecting element (10) by means of gas-tight rivets and/or is attached by using a sealant circumferentially provided between the support webs (19, 20, 21) and the cover (11).

14. The device according to any one of the preceding claims, wherein the cover (11) forms an angle of 30 to 60°, preferably 45°, with the base plate (12).

15. The device according to any one of the preceding claims, wherein the second connecting socket (6) is attached to the cover (11).

16. The device according to any one of the preceding claims, wherein the second connecting socket (6) has a thread, preferably an internal thread.

17. The device according to any one of the preceding claims, wherein a tube connecting piece (7) angled at an angle of 30 to 60°, preferably 45°, is attached to the second connecting socket (6).

## Revendications

1. Dispositif pour gazéifier une suspension reçue dans un bassin de traitement, en particulier des eaux usées, des boues activées et similaires,
comprenant un cadre présentant des longerons (1) et
un distributeur d'air comprimé (3) dont le boîtier (G) présente une pluralité de premières tubulures de raccordement (4) pour le raccordement de conduits de distribution d'air (5) et une deuxième tubulure de raccordement (6) pour le raccordement d'un conduit d'amenée d'air,
le boîtier (G) étant fixé au cadre de telle manière que des premiers axes des premières tubulures de raccordement (4) s'étendent approximativement parallèlement à un plan contenant les longerons (1),
**caractérisé en ce qu'**
un second axe de la deuxième tubulure de raccordement (6) forme un angle de 30 à 60° avec ledit plan.

2. Dispositif selon la revendication 1, dans lequel le second axe de la deuxième tubulure de raccordement (6) forme un angle d'approximativement 45° avec ledit plan.

3. Dispositif selon l'une des revendications précédentes, dans lequel le boîtier (G) est formé à partir d'un élément de raccordement (10) et d'un couvercle (11).

4. Dispositif selon l'une des revendications précédentes, dans lequel l'élément de raccordement (10) présente une plaque de base (12), une paroi de raccordement (13) s'étendant essentiellement verticalement à partir d'un premier grand côté de la plaque de base (12) et deux parois transversales (16) s'étendant essentiellement verticalement à partir des petits côtés de la plaque de base (12).

5. Dispositif selon l'une des revendications précédentes, dans lequel les premières tubulures de raccordement (4) sont formées à partir d'éléments de raccordement montés sur la paroi de raccordement (13).

6. Dispositif selon l'une des revendications précédentes, dans lequel des sections de fixation (17) s'étendant au-delà de la plaque de base (12) sont prévues sur les parois transversales (16).

7. Dispositif selon l'une des revendications précédentes, dans lequel les sections de fixation (17) présentant de préférence des ouvertures (18) pour la fixation de rivets, sont réalisées en une pièce avec les parois transversales (16).

8. Dispositif selon l'une des revendications précédentes, dans lequel les parois transversales (16) sont soudées à la plaque de base (12) et à la paroi de raccordement (13).

9. Dispositif selon l'une des revendications précédentes, dans lequel une première pièce d'appui (19) s'étend à partir d'un deuxième grand côté de la plaque de base (12) à un angle compris entre 30 et 60°, de préférence de 45°.

10. Dispositif selon l'une des revendications précédentes, dans lequel une plaque de recouvrement (14) disposée essentiellement parallèlement par rapport à la plaque de base (12) s'étend à partir d'un troisième grand côté de la paroi de raccordement (13).

11. Dispositif selon l'une des revendications précédentes, dans lequel une deuxième pièce d'appui (20) s'étend à partir d'un troisième grand côté de la paroi de raccordement (13) ou à partir d'un quatrième grand côté de la plaque de recouvrement (14) à un angle compris entre 30 et 60°, de préférence de 45°, dans la direction de la première pièce d'appui (19).

12. Dispositif selon l'une des revendications précédentes, dans lequel des troisièmes pièces d'appui (21) s'étendent essentiellement verticalement par rapport aux parois transversales (16), ces pièces d'appui étant adjacentes aux premières (19) et aux deuxièmes pièces d'appui (20).

13. Dispositif selon l'une des revendications précédentes, dans lequel le couvercle (11) est monté au moyen de rivets étanches au gaz sur l'élément de raccordement (10) et/ou en utilisant un matériau d'étanchéité prévu tout autour entre les pièces d'appui (19, 20, 21) et le couvercle (11).

14. Dispositif selon l'une des revendications précédentes, dans lequel le couvercle (11) forme avec la plaque de base (12) un angle compris entre 30 et 60°, de préférence approximativement de 45°.

15. Dispositif selon l'une des revendications précédentes, dans lequel la deuxième tubulure de raccordement (6) est montée sur le couvercle (11).

16. Dispositif selon l'une des revendications précédentes, dans lequel la deuxième tubulure de raccordement (6) présente un filetage, de préférence un filetage intérieur.

17. Dispositif selon l'une des revendications précédentes, dans lequel un raccord de tuyau (7) coudé à un angle compris entre 30 et 60°, de préférence de 45°, est monté sur la deuxième tubulure de raccordement (6).
